(19) **Europäisches Patentamt / European Patent Office / Office européen des brevets**

(11) **EP 1 598 260 B1**

(12) **EUROPÄISCHE PATENTSCHRIFT**

(45) Veröffentlichungstag und Bekanntmachung des Hinweises auf die Patenterteilung:
**04.07.2007 Patentblatt 2007/27**

(51) Int Cl.:
**B62D 17/00** *(2006.01)*　　**B60G 7/02** *(2006.01)*

(21) Anmeldenummer: **05005704.1**

(22) Anmeldetag: **16.03.2005**

(54) **Karosserieseitige Anlenkung eines Lenkers einer Radaufhängung eines Kraftfahrzeugs**

Bodywork side connection of a suspension arm of a motor vehicle

Connection d'un bras de suspension du côté carrosserie d'un véhicule automobile

(84) Benannte Vertragsstaaten:
**DE FR GB IT**

(30) Priorität: **21.05.2004 DE 102004025004**

(43) Veröffentlichungstag der Anmeldung:
**23.11.2005 Patentblatt 2005/47**

(73) Patentinhaber: **AUDI AG**
**85045 Ingolstadt (DE)**

(72) Erfinder: **Michel, Wilfried**
**93339 Riedenburg (DE)**

(74) Vertreter: **Asch, Konrad**
**AUDI AG,**
**Patentabteilung I/EX**
**85045 Ingolstadt (DE)**

(56) Entgegenhaltungen:
**EP-A- 0 943 529　　DE-A1- 3 131 107**
**DE-A1- 4 404 546　　US-A1- 2003 146 590**
**US-B1- 6 688 616**

## Beschreibung

Die Erfindung betrifft eine karosserieseitige Anlenkung eines Lenkers einer Radaufhängung gemäß der im Oberbegriff des Anspruchs 1 angegebenen Art.

Eine Anlenkung dieser Art ist in der DE 44 04 546 C2 beschrieben. Bei dieser Anlenkung ist ein sich schräg zu einer vertikalen Querebene erstreckender Lenker einer Radaufhängung durch ein Elastomergelenk mit einem karosserieseitigen Gelenkteil verbunden, das durch eine horizontale Schraube zwischen zwei Tragstegen verschraubt ist. Die Schraube durchfasst das Gelenkteil und die Tragstege in Löchern. Für eine stufenweise Spurweitenänderung sind in den Tragstegen zwei einen sich längs dem Lenker erstreckendenden Abstand voneinander aufweisende Löcher in den Tragstegen vorgesehen, in denen die Schraube mit dem karosserieseitigen Gelenkteil wahlweise montierbar ist. Der Abstand zwischen den Tragstegen ist um das Dickenmaß einer Einstellscheibe größer bemessen als die Breite des Gelenkteils. Es sind zwei Einstellscheiben vorgesehen, von denen die eine im Bereich des einen Lochs an der Innenseite des einen Tragstegs verschweißt ist und die andere im Bereich des anderen Lochs an der Innenseite des anderen Tragstegs verschweißt ist. Die Einstellscheiben gewährleisten, dass sich der Lenker in beiden quer zueinander versetzten Montagepositionen exakt in der vertikalen Querebene befindet.

Aus der US 2003/0146950 A1 ist eine verstellbare Aufhängungsvorrichtung für ein Kraftfahrzeug bekannt. Die Aufhängungsvorrichtung umfasst einen, zwischen zwei Tragstegen angeordneten, sich schräg erstreckenden Lenker. Über eine die Tragstege, den Lenker sowie eine an einem Tragsteg innenseitig angeordneten Scheibe durchfassenden Schraube ist der Lenker verstellbar gelagert. Die Scheibe ist dabei als ein loses Bauteil ausgebildet und wahlweise an einem der beiden Tragstege montierbar.

Eine Vorrichtung zur Einstellung der Drehachse eines Gelenks zur schwenkfähigen Aufhängung eines Führungslenkers eines Rades am Aufbau eines Kraftfahrzeugs ist in der DE 31 31 107 A1 offenbart. Die Vorrichtung zeichnet sich durch eine Verstellvorrichtung aus, mit deren Hilfe ein in einem Lagerblock gehaltener, eine Drehachse definierender Lagerbolzen in jede notwendige Radialrichtung verstellbar ist.

Aus der US 6,688,616 B1 ist eine Vorrichtung zum Einstellen von Sturz und Nachlauf eines Rads bekannt. Die Vorrichtung umfasst hierfür ein Halteelement oder Befestigungselement, das um eine Längsachse angeordnet ist. Das Halteelement erstreckt sich durch einen Schlitz, der in einem ersten Stützelement eines Fahrzeugrahmens ausgebildet ist, einen Steuerarm und einen Schlitz, der in einem zweiten Stützelement eines Fahrzeugrahmens ausgebildet ist. Ein erster Nocken ist um das Halteelement und in einer Nut angeordnet, die in dem ersten Stützelement des Fahrzeugrahmens ausgebildet ist. Ferner ist ein zweiter Nocken vorgesehen, der um das Halteelement und eine Nut im zweiten Stützelement des Fahrzeugrahmens angeordnet ist. Zudem sind Einrichtungen zu Einstellen der Position des Steuerarmes relativ zum Fahrzeugrahmen längs der Längsachse des Halteelements vorgesehen.

Der Erfindung liegt die Aufgabe zugrunde, eine Anlenkung der im Oberbegriff des Anspruchs 1 angegebenen Art zu vereinfachen.

Diese Aufgabe wird durch die kennzeichnenden Merkmale des Anspruchs 1 in Verbindung mit seinen Oberbegriffsmerkmalen gelöst.

Die Unteransprüche bilden vorteilhafte Weiterbildungen der Erfindung.

Bei der Ausgestaltung nach dem Anspruch 1 ist die Einstellscheibe ein loses Bauteil, und sie ist wahlweise an dem einen oder anderen Tragsteg montierbar. Aufgrund der Ausbildung der Einstellscheibe als einziges loses Bauteil wird der Herstellungsaufwand aus mehreren Gründen wesentlich verringert. Zum Einen ist nur eine einzige Einstellscheibe erforderlich. Zum Anderen entfällt eine Befestigung der Einstellscheibe. Dabei wird nicht nur der Herstellungsaufwand verringert, sondern es werden im Hinblick auf eine Befestigung durch Schweißen auch schädliche Material- und Materialgefügeveränderungen vermieden. Außerdem eignet sich die Einstellscheibe als loses Bauteil zur Anordnung in beiden Montagestellungen.

Es lässt sich die Befestigung wesentlich stabilisieren, wenn zwei Einstellscheiben vorgesehen sind, die auf einer Breitseite einen Zentrieransatz aufweisen, und die Tragstege einander gegenüberliegend Löcher für die Zentrieransätze aufweisen, in die die zugehörige Einstellscheibe mit ihrem Zentrieransatz wahlweise von der Vorderseite her oder von der Rückseite her einsetzbar ist. Diese Ausgestaltung umfasst jeweils eine Zapfenverbindung zwischen der Einstellscheibe und dem zugehörigen Tragsteg, die die Übertragung von Kräften von der Einstellscheibe auf den Tragsteg ermöglicht.

Wenn die Mittelachsen der Löcher in den Einstellscheiben bezüglich den Mittelachsen der Zentrieransätze in der Längsrichtung des Lenkerarms versetzt sind, ist es möglich, durch den Versatz das Verstellmaß zu bestimmen. Dabei ist es im Weiteren möglich, durch einen geringen Versatz kleine Verstellmaße zu realisieren, z. B. ein Verstellmaß, das kleiner ist als die Querschnittsgröße der bekannten Löcher im Tragsteg.

Eine unrunde oder längliche Querschnittsform der Zentrieransätze und der sie aufnehmenden Aufnahmelöcher führt zu eine Drehsicherung in den Aufnahmelöchern, die formschlüssig ein Drehen der Einstellscheibe und der darin sitzenden Schraube und somit auch eine Veränderung des Versatzmaßes verhindert. Aufgrund der Einsetzbarkeit in die Tragstege wahlweise von außen oder innen, lässt sich der bei einer Verstellung in der Längsrichtung des Lenkerarms zwangsläufig eintretende Verstellung in der Längsrichtung kompensieren.

Die Größe dieses Kompensationsmaßes ist abhängig von der Größe, den der Lenkerarm mit der Querebene einschließt. Für Anlenkungen mit unterschiedlich großen Winkeln sind deshalb entsprechend unterschiedlich breite Einstellscheiben erforderlich.

Weitere Vorteile, Merkmale und Anwendungsmöglichkeiten der vorliegenden Erfindung ergeben sich aus der nachfolgenden Beschreibung in Verbindung mit dem in der Zeichnung dargestellten Ausführungsbeispiel.

Die Erfindung wird im Folgenden anhand des in der Zeichnung dargestellten Ausführungsbeispiels näher beschrieben. In der Beschreibung, in den Patentansprüchen, in der Zusammenfassung und in der Zeichnung werden die in der hinten angeführten Liste der Bezugszeichen verwendeten Begriffe und zugeordneten Bezugszeichen verwendet. In der Zeichnung bedeutet:

Fig. 1    einen horizontalen Schnitt durch eine erfindungsgemäße karosserieseitige Anlenkung eines Lenkers einer Radaufhängung eines Kraftfahrzeugs;

Fig. 2    den Schnitt nach Fig. 1 mit einer vergrößerten Spurweiten-Einstellung des Lenkers;

Fig. 3    eine perspektivische Ansicht einer Einstellscheibe der Anlenkung in vergrößerter Darstellung;

Fig. 4    einen horizontalen Schnitt durch eine erfindungsgemäße karosserieseitige Anlenkung eines Lenkers einer Radaufhängung eines Kraftfahrzeugs in abgewandelter Ausgestaltung;

Fig. 5    den Schnitt nach Fig. 4 bei einer vergrößerten Spurweiten-Einstellung des Lenkers;

Fig. 6    eine perspektivische Ansicht einer Einstellscheibe der Anlenkung nach Fig. 4 in vergrößerter Darstellung;

Fig. 7    eine Draufsicht auf eine Vierlenker-Radachse, die eine Radaufhängung mit vier, nämlich zwei unteren und zwei oberen, Lenkern mit erfindungsgemäßen Anlenkungen aufweist.

Fig. 8    einen horizontalen Schnitt der in Fig. 7 mit X gekennzeichneten Einzelheit in vergrößerter Darstellung.

Die in ihrer Gesamtheit mit 10 bezeichnete Anlenkung ist Teil einer in ihrer Gesamtheit mit 12 bezeichneten Radaufhängung eines Kraftfahrzeugs, das wenigstens zwei Radaufhängungen 12 aufweist, die bezüglich einer vertikalen Längsmittelebene E1 des Kraftfahrzeugs spiegelbildlich angeordnet und ausgebildet sind. Dabei können die Radaufhängungen 12 jeweils Teil einer Vorderachse und/oder Hinterachse sein, wobei sich auch vier Radaufhängungen ergeben können, wie es bei einem vierrädrigen Kraftfahrzeug der Fall ist, insbesondere bei einem Personenkraftfahrzeug. Die nach vorne gerichtete Fahrtrichtung ist mit A bezeichnet.

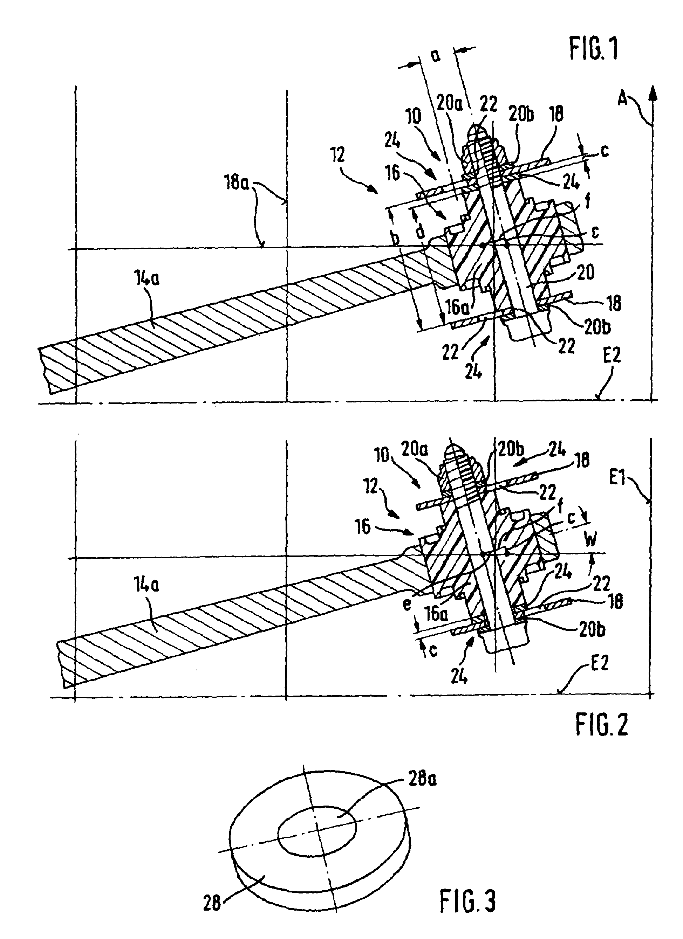

Bei den vorliegenden Radaufhängungen 12 erstrecken sich zugehörige Lenkerarme 14a schräg nach vorne oder hinten bezüglich einer vertikalen Quermittelebene E2, die rechtwinklig zur Längsmittelebene E1 verläuft, wobei ein vorderer und ein hinterer Lenkerarm 14a mit der Quermittelebene E2 einen spitzen Winkel W einschließen, der nach außen geschlossen ist und jeweils einen auf und ab schwenkbaren gemeinsamen Lenker bilden. Die Winkel W können gleich oder unterschiedlich sein. Die Fig. 1 und 2 zeigen einen Lenkerarm 14a, der sich von der karosserieseitigen Anlenkung schräg nach hinten erstreckt. Eine bezüglich der Längsmittelebene E1 auf der anderen Seite des Kraftfahrzeugs gegenüberliegend angeordnete Radaufhängung 12 ist spiegelbildlich angeordnet und ausgebildet.

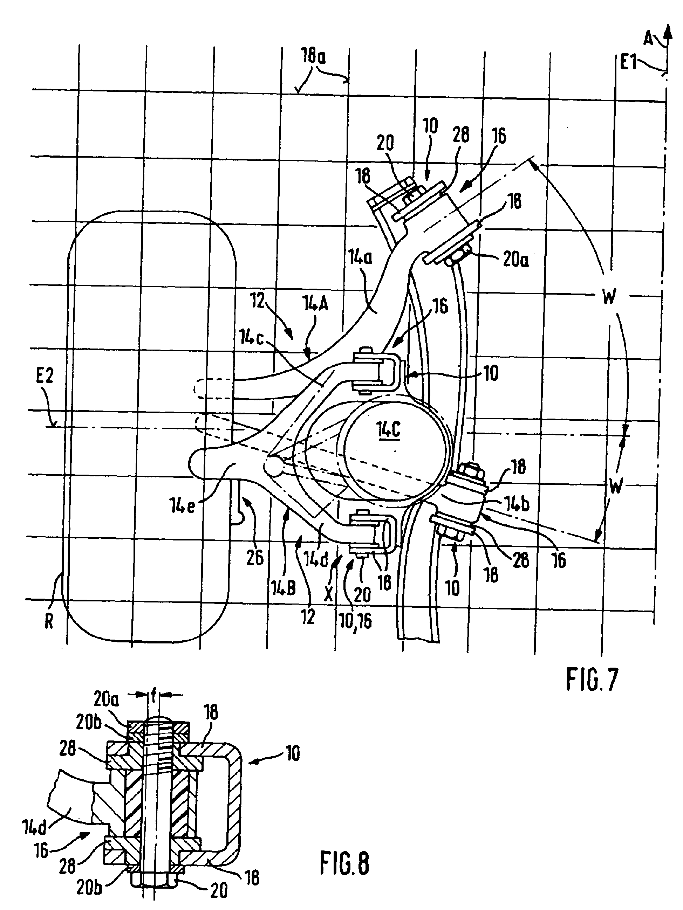

Beim Ausführungsbeispiel nach Fig. 7 sind die bezüglich der Längsmittelebene E1 spiegelbildlich zueinander angeordneten und ausgebildeten Radaufhängungen 12 eines Radaüfhängungs-Paares durch Mehrlenker-Radaufhängungen 12, z. B. Dreilenker-Radaufhängungen 12 gemäß Fig. 7 oder Vierlenker-Radaufhängungen, gebildet, jeweils mit einander entgegengesetzt schräg verlaufenden unteren Lenkerarmen 14a, 14b und oberen Lenkerarmen, die sich ebenfalls einander entgegengesetzt schräg oder parallel zur Querebene E2 erstrecken können. Die jeweils zueinander gehörigen unteren und oberen Lenkerarme 14a, 14b können jeweils einen sogenannten unteren oder oberen Querlenker 14a, 14B für die zugehörige Radaufhängung 12 bilden.

Dabei können die oberen Lenker durch einen gemeinsamen Lenkerdoppelarm nach Fig. 7 gebildet sein, bei der die oberen Lenker durch einen gemeinsamen Dreieckslenker gebildet, dessen zwei karosserieseitigen Lenkerarmabschnitte mit 14c, 14d und dessen einziger radseitiger Lenkerarmabschnitt mit 14e bezeichnet sind bzw. ist.

Wenigstens die unteren Lenkerarme 14a, 14b können sich unterschiedlich schräg erstrecken und jeweils einen spitzen Winkel W mit der rechtwinklig zur Längsmittelebene E1 verlaufenden Querebene E2 der betreffenden Radachse einschließen. Trotz unterschiedlicher Winkel W ergeben sich für die Anlenkungen 10 der Lenker prinzipiell gleiche Funktionsbedingungen. Deshalb wird im folgenden nur eine Anlenkung 10 bei bezüglich der Querebene E2 schräger Lenkeranordnung und eine Anlenkung 10 bei bezüglich der Querebene E2 paralleler Lenkeranordnung beschrieben.

In Fig. 1 ist ein Lenkerarm 14a dargestellt, der sich z. B. gerade und von der Anlenkung 10 aus schräg nach außen und hinten erstreckt. Der oder die Lenkerarme können sich in ihrer schrägen Anordnung aber auch gekrümmt erstrecken, wie es Fig. 7 beispielhaft für den vorderen Lenkerarm 14a zeigt. Für den Lenkerarm 14b kann die Anlenkung 10 entsprechend winkelversetzt ausgebildet sein.

Der Lenkerarm 14a ist durch ein elastisches Gelenk 16 mit der Anlenkung 10 bzw. der Karosserie 18a verbunden, die in Fig. 1 durch Gitterlinien angedeutet ist, die parallel zu den Ebenen E1, E2 verlaufen. Das Gelenk 16 ist ein Elastomergelenk, das durch ein ringförmiges Gummi-Metall-Hülsenlager gebildet sein kann, das einen hülsenförmigen Verbindungskörper aus elastischem Material, z. B. aus Gummi oder Kunststoff, aufweist, der innen fest auf einer Innenhülse sitzt und außen fest in einem Gelenkloch des Lenkerarms 14a sitzt. Das karosserieseitige Gelenkteil 16a, das beim vorliegenden Ausführungsbeispiel durch die Innenhülse gebildet ist, ist mit dem Gelenk 16 zwischen zwei etwa vertikal angeordneten und in der Längsrichtung des Lenkerarms 14a verlaufenden Tragstegen 18 der Karosserie 18a angeordnet und mit den Tragstegen 18 verschraubt. Hierzu kann eine Schraube 20 vorgesehen sein, die die Tragstege 18 in Löchern 22 und den Hohlraum 16b der Innenhülse durchfasst und durch eine dem Schraubenkopf gegenüberliegend aufgeschraubte Mutter 20a fest verschraubt ist. Zwischen dem Kopf der Schraube 20 sowie der Mutter 20a und den Tragstegen 18 kann jeweils eine Unterlegscheibe 20b angeordnet sein. Bei dieser Befestigung kann der Lenkerarm 14 seine vertikalen Schwenkbewegungen auf dem Gelenkteil 16a ausführen.

In die Anlenkung 10 ist eine in ihrer Gesamtheit mit 24 bezeichnete Einstellvorrichtung zum Einstellen der Spurweite des zugehörigen Rades R integriert, die es ermöglicht, den Lenkerarm 14a und somit einen mit dem anderen Ende des Lenkerarms 14a gelenkig verbundenen Radträger 26 und somit die gesamte Radachse längs der Querebene E2 zu verstellen und einzustellen. Dies wird durch folgende Ausgestaltungsmerkmale ermöglicht.

Die Schraube 20 ist in der Längsrichtung des Lenkerarms 14a verstellbar und in der eingestellten Position feststellbar. Hierzu können z. B. als Einzellöcher oder als Langlöcher ausgebildete Löcher 22 in den Tragstegen 18 dienen, die die Schraube 20 durchfasst. Der in die Längsrichtung des Lenkerarms 14a gerichtete Abstand a der Löcher 22 voneinander bzw. die entsprechend wirksame Länge der Langlöcher ist unter Berücksichtigung der gewünschten Spurweitenänderung bemessen.

Der Abstand b zwischen den Tragstegen 18 ist um das Dickenmaß c einer Einstellscheibe 28 größer als die Breite d des Gelenkteils 16a bzw. auch des Gelenks 16. Außerdem ist die Einstellscheibe 28 wahlweise in wenigstens zwei Einbaupositionen zwischen dem Gelenkteil 16a und einer der beiden Tragstege 18 montierbar, wobei die Schraube 20 ein Loch 22a in der Einstellscheibe 28 durchfasst. In der einen Einbauposition geringerer Spurweite nach Fig. 1 befindet sich die Einstellscheibe 28 an der Innenseite des vorderen Tragstegs 18 und in der anderen Einbauposition größerer Spurweite nach Fig. 2 befindet sich die Einstellscheibe 28 an der Innenseite des hinteren Tragstegs 18. Die bei einer Verstellung des Gelenks 16 in der Richtung des Abstands a stattfindende Abweichung von der Querebene E2 lässt sich durch den Umbau der Einstellscheibe 28 kompensieren, und deshalb lässt sich der Lenkerarm 14 wahlweise für eine Vergrößerung oder Verkleinerung der Spurweite exakt in der Querebene E2 verstellen und einstellen.

Fig. 3 zeigt die Einstellscheibe 28 mit ihrem Loch 28 in der Form einer üblichen Unterlegscheibe in perspektivischer Darstellung.

Zusammenfassend erfolgt eine Spurweitenänderung somit zum Einen durch eine seitliche Verstellung der Schraube 20 in der Längsrichtung des Lenkerarms 14a und zum Anderen nach vorne oder hinten durch den Umbau der Einstellscheibe 28, und zwar je nach dem, ob die Spurweite vergrößert oder verringert werden soll.

Für eine kleine Spurweite gemäß Fig. 1 werden die Schraube 20 in das innere Loch 22 eingesetzt bzw. nach innen verstellt und die eine Einstellscheibe 28 an der Rückseite des vorderen Tragstegs 18 und die andere Einstellscheibe 28 an der Vorderseite des hinteren Tragstegs 18 eingesetzt.

Für eine große Spurweite gemäß Fig. 2 werden die Schraube 20 in das äußere Loch 22 eingesetzt bzw. nach außen verstellt und die eine Einstellscheibe 28 an der Außenseite des vorderen Tragstegs 18 und die andere Einstellscheibe 28 an der Innenseite des hinteren Tragstegs 18 eingesetzt.

Dabei befinden sich die Löcher 22a bezüglich der Mittelachse 28d in einer nach innen versetzten Position.

Ausgehend von einer gewünschten Spurweitenänderung e ergibt sich ein in der Längsrichtung des Lenkerarms 14 gerichteter Abstand a (Verstellmaß) für die Schraube 20 nach der Formel

$$\text{Abstand } a = \text{Spurweitenänderung } e \text{ mal cosin } W$$

$$\text{oder } a = e \text{ mal cos } W$$

Das quer zum Lenkerarm 14 gerichtete und der Dicke c der Einstellscheibe 28 entsprechende Versatzmaß für den Umbau der Einstellscheibe 28 ergibt sich nach der Formel

$$\text{Versatzmaß} = \text{Spurweitenänderung e mal sin W}$$

$$\text{oder } c = e \text{ mal sin W}$$

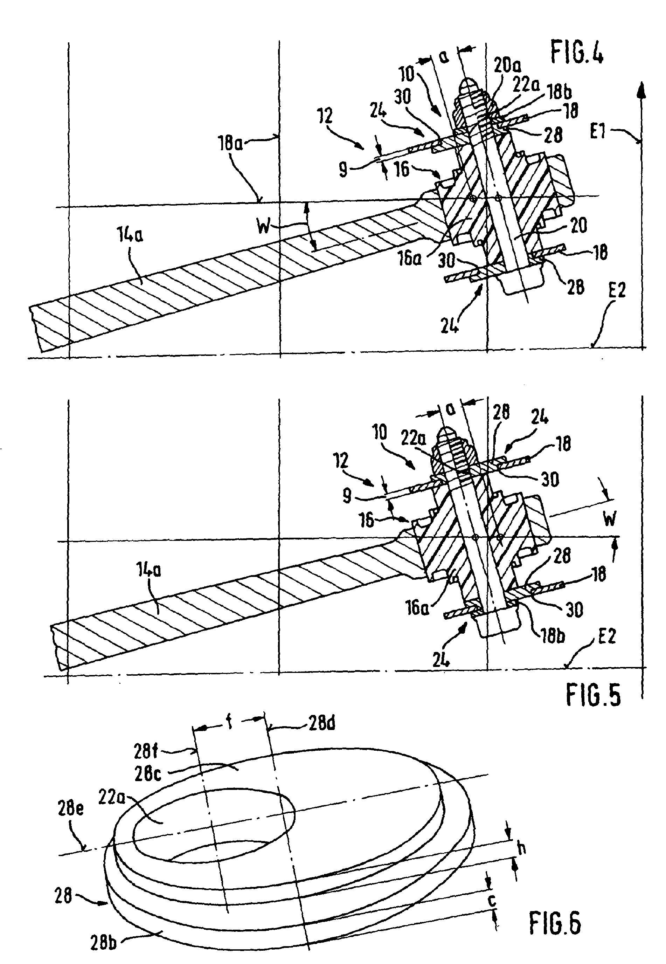

Beim in Fig. 4 bis 6 dargestellten Ausführungsbeispiel, bei dem gleiche oder vergleichbare Teile mit gleichen Bezugszeichen versehen sind, sind zwei einander vorzugsweise gleiche Einstellscheiben 28 vorgesehen, die jeweils in eine z. B. durch eine Ausnehmung gebildete Steckfassung am zugehörigen Tragsteg 18 einsteckbar sind und die vorzugsweise auf ihrer einen Breitseite ihres Scheibenkörpers 28b einen Zentrieransatz 28c und ein bezüglich der Mittelachse 28d des Zentrieransatzes 28c ein um ein Maß f versetztes Loch 22a für die Schraube 20 aufweisen. Der Scheibenkörper 28b und der Zentrieransatz 28c sind vorzugsweise in der gleichen Richtung länglich ausgebildet, wobei die Enden jeweils halbkreisförmig gerundet sein können. In den Tragstegen 18 ist jeweils ein Aufnahmeloch 30 angeordnet, in das jeweils der Zentrieransatz 28c der zugehörigen Einstellscheibe 28 mit geringem Bewegungsspiel wahlweise von außen oder innen einsteckbar ist. Wenn die Einstellscheiben 28 gleich ausgebildet sind, können sie wechselseitig montiert werden, d. h., es bedarf nur eines einzigen Scheibentyps, wobei die Einstellscheiben 28 zu allen Aufnahmelöchern 30 passen.

Für eine kleine Spurweite gemäß Fig. 4 werden die Einstellscheiben 28 bezüglich den Mittelachsen 28d ihrer Zentrieransätze 28c in einer solchen Drehposition montiert, in der ihre Löcher 22a zur Längsmittelebene E1 hin bzw. nach innen versetzt sind, wobei eine Einstellscheibe 28 von hinten in den vorderen Tragsteg 18 und die andere Einstellscheibe 28 von vorne in den hinteren Tragsteg 28 eingesetzt wird. Dabei befinden sich die Löcher 22 bezüglich der Mittelachse 28d in einer um a/2 nach innen versetzten Position.

Für eine große bzw. vergrößerte Spurweite werden die Einstellscheiben 28 ausgehend von der vorbeschriebenen Position in einer Position montiert, in der sie zum Einen um 180° um die Mittelachse 28d verdreht sind und zum Anderen um 180° um ihre horizontale Achse 28e verdreht sind, wobei die eine Einstellscheibe 28 an der Rückseite des vorderen Tragstegs 18 und die andere Einstellscheibe 28 an der Vorderseite des hinteren Tragstegs 18 eingesetzt sind. In dieser Position sind die Löcher 22a bzw. ist die darin eingesetzte Schraube 20 bezüglich der Mittelachse 28d um a/2 und bezüglich der Stellung der geringen Spurweite gemäß Fig. 4 um das gewünschte Verstellmaß a versetzt. Dies gilt - ausgehend von der vorbeschriebenen Position für eine Einstellung der geringeren Spurweite gemäß Fig. 4 im umgekehrten Sinne.

Die Höhe h des Zentrieransatzes 28b kann jeweils etwa der Dicke g der Tragstege 18 entsprechen oder etwas geringer sein.

Beim Ausführungsbeispiel nach Fig. 4 bis 6 braucht nur eine Unterlegscheibe 20b dem jeweiligen Zentrieransatz 28c gegenüberliegend an der Außenseite des betreffenden Tragsteges 18 angeordnet zu werden, der wenigstens teilweise größer ist als der Zentrieransatz 28b, um eine durch das Verschrauben erzielbare Klemmwirkung gegen die Außenseite des zugehörigen Tragstegs 18 zu gewährleisten. Auf der gegenüberliegenden Seite ist keine Unterlegscheibe 28b erforderlich, da die dort vorhandene Einstellscheibe 28 die Funktion einer Unterlegscheibe 28b erfüllt.

Für Lenkerarme 14 unterschiedlicher Winkel W bedarf es jeweils einer Einstellscheibe 28 mit einem an den jeweiligen Winkel W angepassten Abstand f der Mittelachse 28f des Loches 22a von der Mittelachse 28d des Zentrieransatzes 28c, wobei der Abstand f die Hälfte des Verstellmaßes a beträgt, nämlich

$$f = a \text{ geteilt durch } 2$$

Hieraus folgt, dass das Versatzmaß f dem Kosinus des Winkels W geteilt durch 2 entspricht.

$$f = e \text{ mal cos W geteilt durch } 2$$

Dies gilt auch für solche Lenkerarme, bei denen der Winkel 0 ist. Bei einem solchen Lenkerarm, wie es z. B. bei den Lenkerarmabschnitten 14c, 14d der Fall ist, entspricht das Maß der Spurweitenänderung e dem Abstand a. Bei einem solchen Lenker braucht deshalb bei einer Spurweitenänderung e, d. h., bei einer Vergrößerung oder Verkleinerung der Spurweite, die jeweils zugehörige Einstellscheibe 28 nur um ihre Achse 28d um 180° gedreht zu werden. Wie Fig. 8 erkennen lässt, ist ein Drehen der Einstellscheiben 28 um ihre Achsen 28d und Umsetzen zur jeweils anderen Seite zwar unschädlich, da keine Positionsänderungen für den Lenkerarm 14c, 14d und seines z. B. elastischen, Gelenks 16 entstehen, jedoch ist ein solches Umsetzen nicht erforderlich. Fig. 8 zeigt die Anlenkung 10 in der Einstellung einer großen Spurweite.

## BEZUGSZEICHENLISTE

| | |
|---|---|
| 10 | Anlenkung |
| 12 | Radaufhängung |
| 14A | unterer Querlenker |
| 14B | oberer Querlenker |
| 14C | Federbein |
| 14a | Lenkerarm |
| 14b | Lenkerarmabschnitt |
| 14c | Lenkerarmabschnitt |
| 14d | Lenkerarmabschnitt |
| 14e | Lenkerarmabschnitt |
| 16 | Gelenk |
| 16a | karosserieseitiges Gelenkteil |
| 16b | Hohlraum |
| 18 | Tragstege |
| 18a | Karosserie |
| 20 | Schraube |
| 20a | Mutter |
| 20b | Unterlegscheibe |
| 22 | Löcher |
| 22a | Löcher |
| 24 | Einstellvorrichtung |
| 26 | Radträger |
| 28 | Einstellscheibe |
| 28b | Scheibenkörper |
| 28c | Zentrieransatz |
| 28d | Mittelachse |
| 28e | Mittelachse |
| 28f | Mittelachse |
| 30 | Löcher |
| | |
| a | Abstand |
| b | Abstand |
| c | Dickenmaß |
| d | Breite |
| e | Spurweitenänderung |
| f | Achsabstand |
| A | Fahrtrichtung |
| E1 | Längsmittelebene |
| E2 | Quermittelebene |
| R | Rad |
| W | Winkel |

## Patentansprüche

1. Karosserieseitige Anlenkung (10) eines Lenkers (14) einer Radaufhängung (12) eines Kraftfahrzeugs, wobei der Lenker (14) sich bezüglich einer vertikalen Querebene (E2) des Kraftfahrzeugs im wesentlichen schräg erstreckt und durch ein im Bereich der Anlenkung (10) angeordnetes Gelenk (16) mit zwei etwa vertikalen, das Gelenk (16) übergreifenden Tragstegen (18) verbunden ist, wobei das karosserieseitige Gelenkteil (16a) durch eine Schraube (20) verschraubt ist, die die Tragstege (18) und eine an dem einen Tragsteg (18) innenseitig angeordnete Einstellscheibe (28) jeweils in einem Loch (22) durchfasst, und wobei das Gelenk (16) in der Querebene (E2) etwa horizontal verstellbar ist, wobei die Einstellscheibe (28) ein loses Bauteil ist und wahlweise an dem einen oder anderen Tragsteg

**EP 1 598 260 B1**

(18) montierbar ist und an den Tragstegen (18) jeweils eine Steckfassung angeordnet ist, in die die Einstellscheibe (28) einsteckbar ist, **dadurch gekennzeichnet, dass** zwei Einstellscheiben (28) vorgesehen sind, die auf einer Breitseite einen Zentrieransatz (28c) aufweisen, und die Tragstege (18) einander gegenüberliegend jeweils eine Steckfassung oder eine Ausnehmung bildende Aufnahmelöcher (30) für die Zentrieransätze (28c) aufweisen, in die die zugehörige Einstellscheibe (28) mit ihrem Zentrieransatz (28c) wahlweise von der Vorderseite oder von der Rückseite des betreffenden Tragstegs (18) her einsetzbar ist.

2. Anlenkung nach Anspruch 1, **dadurch gekennzeichnet, dass** die Steckfassungen durch eine Ausnehmung gebildet sind, in die die Einstellscheiben (28) horizontal einsteckbar sind.

3. Anlenkung nach Anspruch 1, **dadurch gekennzeichnet, dass** die Mittelachsen (28f) der Aufnahmelöcher (30) in den Einstellscheiben (28) bezüglich den Mittelachsen (28d) der Zentrieransätze (28c) in der Längsrichtung des Lenkerarms (14a) versetzt sind.

4. Anlenkung nach Anspruch 1 oder 3, **dadurch gekennzeichnet, dass** die Zentrieransätze (28c) und die Aufnahmelöcher (30) eine längliche Form aufweisen und die Einstellscheiben (28) in zwei um 180° um die Mittelachse (28d) des zugehörigen Zentrieransatzes (28c) verdrehten Positionen in das zugehörige Aufnahmeloch (30) einsetzbar sind.

5. Anlenkung nach Anspruch 3, **dadurch gekennzeichnet, dass** das Versatzmaß der Löcher in den Einstellscheiben in der Längsrichtung der länglichen Form gerichtet ist.

6. Anlenkung nach Anspruch 3, **dadurch gekennzeichnet, dass** das Versatzmaß der Hälfte des Produktes aus einer gewünschten Spurweitenänderung und dem Kosinus eines Winkels (W) entspricht.

**Claims**

1. Bodywork-side connection (10) of a control arm (14) of a suspension (12) of a motor vehicle, the control arm (14) extending substantially obliquely with respect to a vertical transverse plane (E2) of the motor vehicle and being connected by a joint (16) arranged in the region of the connection (10) to two approximately vertical support plates (18) extending on either side of the joint (16), the joint part (16a) on the bodywork side being secured by a screw (20) which passes through a hole (22) in each of the support plates (18) and through an adjusting washer (28) arranged on the inner side of the one support plate (18), the joint (16) being adjustable approximately horizontally in the transverse plane (E2), the adjusting washer (28) being a separate component which can be mounted selectively on one or the other support plate (18) and a socket into which the adjusting washer (28) is insertable being arranged on each of the support plates (18), **characterised in that** there are provided two adjusting washers (28) which have on a flat side a centring projection (28c) and the support plates (18) each have a receiving hole (30) disposed opposite one another and each forming a socket or an opening for the centring projections (28c) into which the associated adjusting washer (28) can be inserted with its centring projection (28c) selectively from the front or rear side of the respective support plate (18).

2. Connection according to claim 1, **characterised in that** the sockets are formed by an opening into which the adjusting washers (28) can be inserted horizontally.

3. Connection according to claim 1, **characterised in that** the centre axes (28f) of the receiving holes (30) in the adjusting washers (28) are offset with respect to the centre axes (28d) of the centring inserts (28c) in the longitudinal direction of the control arm (14a).

4. Connection according to claim 1 or 3, **characterised in that** the centring projections (28c) and the receiving holes (30) have an elongated shape and the adjusting washers (28) are insertable in the associated receiving hole (30) in two positions rotated through 180° about the centre axis (28d) of the associated centring projection (28c).

5. Connection according to claim 3, **characterised in that** the dimension of offset of the holes in the adjusting washers is oriented in the longitudinal direction of the elongated shape.

6. Connection according to claim 3, **characterised in that** the amount of offset corresponds to one-half of the product of a desired track width change and the cosine of an angle (W).

**Revendications**

1. Articulation (10) d'un bras oscillant transversal (14) d'une suspension de roue (12) du côté de la carrosserie d'un véhicule automobile, le bras oscillant transversal (14) s'étendant principalement incliné par rapport à un plan transversal vertical (E2) du véhicule automobile et étant relié via une articulation (16), disposée dans la zone de l'articulation (10), avec deux nervures de support (18) à peu près verticales et recouvrant l'articulation (16), la pièce articulée (16a) du côté de la carrosserie étant vissée par une vis (20) qui traverse respectivement par un trou (22) les nervures de support (18) et une rondelle de compensation (28) disposée du côté intérieur sur l'une des nervures de support (18), et l'articulation (16) étant orientable sur le plan transversal (E2) à peu près horizontalement, la rondelle de compensation (28) étant une pièce de construction amovible et pouvant être montée au choix sur l'une ou l'autre nervure de support (18) et une douille de connexion étant respectivement disposée sur les nervures de support (18), douille dans laquelle la rondelle de compensation (28) est insérable, **caractérisée en ce que** deux rondelles de compensation (28) sont prévues, rondelles présentant sur un côté large un épaulement de centrage (28c), et les nervures de support (18) opposées les unes aux autres présentant respectivement une douille de connexion ou un trou de logement (30) formant un creux pour les épaulements de centrage (28c) dans lesquels la rondelle de compensation correspondante (28) est insérable avec son épaulement de centrage (28c) au choix par le côté avant ou par le côté arrière de la nervure de support concernée (18).

2. Articulation selon la revendication 1, **caractérisée en ce que** les douilles de connexion sont formées par un creux dans lequel les rondelles de compensation (28) sont insérables horizontalement.

3. Articulation selon la revendication 1, **caractérisée en ce que** les axes médians (28f) des trous de logement (30) sont déplacés (14a) dans les rondelles de compensation (28) dans le sens longitudinal du bras de suspension par rapport aux axes médians (28d) des épaulements de centrage (28c).

4. Articulation selon la revendication 1 ou 3, **caractérisée en ce que** les épaulements de centrage (28c) et les trous de logement (30) présentent une forme longitudinale et les rondelles de compensation (28) peuvent être placées dans le trou de logement correspondant (30) dans deux positions tournées de 180° autour de l'axe médian (28d) de l'épaulement de centrage correspondant (28c).

5. Articulation selon la revendication 3, **caractérisée en ce que** la mesure de décalage des trous dans les rondelles de compensation est orientée dans le sens longitudinal de la forme longitudinale.

6. Articulation selon la revendication 3, **caractérisée en ce que** la mesure de décalage correspond à la moitié du produit d'une modification d'écartement des roues souhaitée et du cosinus d'un angle (W).

FIG.1

FIG.2

FIG.3

EP 1 598 260 B1

FIG.4

FIG.5

FIG.6

FIG. 7

FIG. 8

**IN DER BESCHREIBUNG AUFGEFÜHRTE DOKUMENTE**

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

**In der Beschreibung aufgeführte Patentdokumente**

- DE 4404546 C2
- US 20030146950 A1
- DE 3131107 A1
- US 6688616 B1